# EUROPÄISCHE PATENTSCHRIFT

(11) **EP 3 991 289 B1**
(45) Veröffentlichungstag und Bekanntmachung des Hinweises auf die Patenterteilung: **20.11.2024**
(21) Anmeldenummer: 20734733.7
(22) Anmeldetag: 25.06.2020
(51) Int. Cl.: H02P 9/00, H02P 21/05

(54) **VERFAHREN ZUM MINIMIEREN VON GENERATORSCHWINGUNGEN UND STEUEREINHEIT DAMIT**
METHOD FOR MINIMISING GENERATOR VIBRATIONS AND CONTROL UNIT THEREOF
PROCÉDÉ POUR MINIMISER LES VIBRATIONS D'UN GÉNÉRATEUR ET UNITÉ DE CONTRÔLE

(30) Priorität: 28.06.2019 DE 102019117477
(43) Veröffentlichungstag der Anmeldung: 04.05.2022
(73) Patentinhaber: Wobben Properties GmbH, 26607 Aurich (DE)
(72) Erfinder: CASSOLI, Jair, 26603 Aurich (DE); ROSSO, Roberto, 26605 Aurich (DE)
(74) Vertreter: Eisenführ Speiser
(86) Internationale Anmeldenummer: PCT/EP2020/067815
(87) Internationale Veröffentlichungsnummer: WO 2020/260454

(56) Entgegenhaltungen:
- EP-A1- 2 485 388
- EP-A1- 2 869 458
- EP-A2- 2 043 255
- EP-B1- 2 485 388
- DE-A1- 102015 205 348

## Beschreibung

Die vorliegende Erfindung betrifft eine Verfahren zum Steuern einer Windenergieanlage und eine Steuereinheit einer Windenergieanlage.

Windenergieanlage weisen üblicherweise einen Generator auf, welcher im Wesentlichen aus einem Stator und einem Rotor ausgebildet ist. Zwischen dem Stator und dem Rotor befindet sich ferner ein Luftspalt.

Durch einen ungleichmäßigen Luftspalt des Generators, der bspw. durch Bauteiltoleranzen hervorgerufen werden, kann es dazu kommen, dass die Amplitude der induzierten Polradspannung an den Statorwicklungen Schwingungen mit der mechanischen Frequenz des Rotors aufweist.

Diese Schwingungen können zu Luftspaltleistungsschwingungen gleicher Frequenz führen, was wiederum zu erhöhten Schallemissionen und/oder Turmschwingungen führen kann.

Das Deutsche Patent- und Markenamt hat in der Prioritätsanmeldung zur vorliegenden Anmeldung folgenden Stand der Technik recherchiert: EP 2 485 388 A1, EP 3 010 143 A1, EP 3 454 469 A1, EP 3 297 156 A1 und Artikel von NezarABOU-QAMAR et al.: "Cancellation of harmonic torque disturbance in permanent magnet synchronous motor drives by using an adaptive feedforward controller", In: ET Power Electronics, Vol. 11, 2018, Iss. 14, S. 2215-2221. - ISSN 1755-4535.

EP 2 869 458 A1 beschreibt eine Steuereinheit für einen Gleichrichter eines Umrichters einer Windenergieanlage, insbesondere zur Reduzierung von Generatorlärm.

DE 10 2015 205 348 A1 beschreibt ein Verfahren zum Steuern eines Synchrongenerators einer getriebelosen Windenergieanlage.

EP 2 043 255 A2 beschreibt ein Verfahren zum Steuern von Drehmomentwelligkeiten in Permanentmagnet-Synchronmaschinen.

Aufgabe der vorliegenden Erfindung ist es daher, eines der obengenannten Probleme zu adressieren. Insbesondere soll eine Möglichkeit geschaffen werden, Schwingungen der elektrischen Leistung eines Generators zu verringern, insbesondere solche, die durch ungleichmäßige Luftspalte hervorgerufen werden. Zumindest soll aber eine Alternativ zu bisher Bekanntem bereitgestellt werden.

Erfindungsgemäß wird somit ein Verfahren definiert durch die Merkmale des unabhängigen Anspruchs 1 vorgeschlagen.

Der Generator ist dabei bevorzugt als Innenläufer ausgeführt, besonders bevorzugt als 6-phasiger Generator mit zwei, um 30° zueinander verschobenen 3-phasigen Systemen.

Gemäß dem vorgeschlagenen Verfahren werden in einem ersten Schritt rotorfeste d- und q-Koordinaten für wenigstens einen 3-phasigen Statorstrom des Generators vorgeben. Dies kann bspw, mittels eines beliebigen dq-Transformationsverfahrens erfolgen, wie bspw. ein dq-Transformationsverfahren umfassend ein sogenanntes MEPA-Verfahren (Maximum Efficiency per Ampere).

In einem weiteren, bevorzugt zeitgleichen Schritt, wird wenigstens ein Wechselanteil für die rotorfeste d- und/oderq-Koordinate in Abhängigkeit einer erfassten Amplitude und einer erfassten Phasenlage einer elektrischen Leistungsschwingung am Generator bestimmt. Das Bestimmen des Wechselanteils für die rotorfeste d- und/oder q-Koordinate erfolgt dabei bevorzugt unter Berücksichtigung einer Rotorlage, die eine mechanische Lage des Rotors in Bezug auf den Stator wiedergibt.

Es wird also insbesondere vorgeschlagen einen Wechselanteil für eine d- und/oder q-Koordinate in Abhängigkeit einer mechanischen Rotorlage zu erzeugen.

In einem weiteren Schritt wird dann der Wechselanteil für die rotorfeste d- und/oder q-Koordinate auf die rotorfeste d- und/oder q-Koordinate aufaddiert, insbesondere zu einer veränderten d- und/oder q-Koordinate.

Es wird also insbesondere auch vorgeschlagen, einen Gleichanteil einer d- und/oder q-Koordinate so mit einem Wechselanteil einer d- und/oder q-Koordinate zu ergänzen, dass eine veränderte d- und/oder q-Koordinate entsteht, die sowohl einen Gleichanteil als auch einen Wechselanteil aufweist.

Anschließend wird der aktive Gleichrichter wenigstens in Abhängigkeit dieser veränderten d- und/oder q-Koordinate gesteuert.

Bevorzugt erfolgt dies durch abermalige Transformation der veränderten d- und/oder q-Koordinate in abc-Koordinaten. Der Gleichrichter wird dabei bevorzugt mittels einer feldorientier Regelung gesteuert.

Die Erfindung schafft somit eine Möglichkeit für ein Regelverfahren, welches die elektrischen Leistungsschwingungen im Bereich der mechanischen Frequenz verringert.

Hierdurch ist es auch möglich, Vibrations- und Akustikeffekte am Generator zu minimieren, insbesondere solche, die durch einen unregelmäßigen Luftspalt hervorgerufen werden.

Vorzugsweise wird der Wechselanteil für die rotorfeste d- und/oder q-Koordinate in Abhängigkeit der Rotorlage erzeugt.

Es wird also auch vorgeschlagen, die mechanische Rotorlage des Generators zu berücksichtigen.

Besonders vorteilhaft hierbei ist, dass hierdurch eine äußerst genaue Regelung vorgenommen werden kann, die Vibrations- und Akustikeffekte am Generator derart verringern kann, dass auch etwaige, hieraus resultierende Turmschwingungen reduziert werden können.

Vorzugsweise wird zum Bestimmen des Wechselanteils für die rotorfeste d- und/oder q-Koordinate eine drehmomentbildende Komponente auf Null geregelt, insbesondere mittels eines PI-Reglers.

Es wird also insbesondere auch vorgeschlagen, dass Verfahren derart auszuführen, dass die drehmomentbildende q-Komponente zu Null geregelt wird.

Zudem ist es durch die Verwendung eines PI-Reglers möglich die mechanische Unregelmäßigkeit des Luftspaltes elektrisch derart abzubilden, dass diese mechanische Störung elektrisch nicht mehr ins Gewicht fällt.

Es wird erfindungsgemäß also insbesondere auch vorgeschlagen die mechanische Unregelmäßigkeit des Luftspaltes elektrisch zu glätten.

Vorzugsweise wird zum Bestimmen des Wechselanteils für die rotorfeste d- und/oder q-Koordinate, eine feldbildendende Komponente als Null vorgeben wird.

Vorzugsweise wird zum Erfassen der Amplitude und der Phasenlage der elektrischen Leistungsschwingung am Generator eine vom Generator abgegebene Ist-Leistung und eine mechanische Frequenz des Generators bestimmt.

Dies kann bspw. mittels Messmitteln erfolgen, die am Generator angeordnet sind.

Vorzugsweise wird der Wechselanteil für die rotorfeste d- und/oder q-Koordinate aus αβ-Koordinaten gewonnen.

Es wird insbesondere also auch vorgeschlagen, die d- und/oder q-Koordinaten aus αβ-Koordinaten zu gewinnen.

Dies kann bspw. mittels einer Transformation durch eine Transformationseinheit erfolgen. Vorzugsweise erfolgt das Steuern des aktiven Gleichrichters mittels abc-Koordinaten, insbesondere so, dass zu es zu einer Reduzierung von Generator- und/oder Turmschwingung kommt.

Erfindungsgemäß wird ferner eine Steuereinheit definiert durch die Merkmale des unabhängigen Anspruchs 8 vorgeschlagen.

Vorzugsweise ist die Steuereinheit dazu eingerichtet ist, mit einem Kalmanfilter und/oder der Ansteuereinheit verbunden zu werden.

Vorzugsweise umfasst die Steuereinheit eine erste Transformationseinheit, die in Abhängigkeit einer Rotorlage eine drehmomentbildende Komponente erzeugen kann. Vorzugsweise umfasst die Steuereinheit ferner einen PI-Regler, insbesondere um eine drehmomentbildende Komponente auf Null zu regeln.

Vorzugsweise umfasst die Steuereinheit ferner eine zweite Transformationseinheit, die dazu eingerichtet ist, aus einem Gleichanteil einer d- und/oder q-Koordinate unter Berücksichtigung einer Rotorlage einen Wechselanteil einer d- und/oder q-Koordinate zu generieren, insbesondere eine, die mit der mechanischen Frequenz des Rotors schwingt. Vorzugsweise ist die Steuereinheit dazu eingerichtet, ein vorstehend oder nachstehend beschriebenes Verfahren auszuführen.

Es wird ferner eine Windenergieanlage vorgeschlagen, umfassend einen Generator, der einen Stator mit einer Drehachse aufweist, um die ein Rotor gelagert ist, einen mit dem Stator der Windenergieanlage elektrisch verbundenen aktiven Gleichrichter, der dazu eingerichtet ist, mittels einer feldorientierten Regelung gesteuert zu werden, und eine vorstehend oder nachstehend beschriebene Steuereinheit.

In einer bevorzugten Ausführungsform ist der Generator ein 6-phasiger Generator mit zwei um 30° versetzten Drehstromsystemen. In solchen Fällen wird das vorstehend und/oder nachstehend beschriebene Verfahren für jedes System einzeln durchgeführt.

In einer besonders bevorzugten Ausführungsform ist der Generator als Innenläufer ausgebildet.

Vorzugsweise umfasst die Windenergieanlage einen Kalmanfilter, der mit der Steuereinheit verbunden ist und außerdem oder alternativ eine Ansteuereinheit, die dazu eingerichtet ist, mit den aktiven Gleichrichter anzusteuern und die mit der Steuereinheit verbunden ist.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt eine schematische Ansicht eines elektrischen Stranges einer Windenergieanlage gemäß einer Ausführungsform.
- Fig. 3: zeigt einen schematischen Aufbau einer Steuereinheit einer Windenergieanlage gemäß einer Ausführungsform.
- Fig. 4: zeigt einen schematischen Aufbau eines bevorzugten Teils einer Steuereinheit einer Windenergieanlage gemäß einer Ausführungsform.
- Fig. 5: zeigt einen schematischen Ablauf eines Verfahrens gemäß einer Ausführungsform.

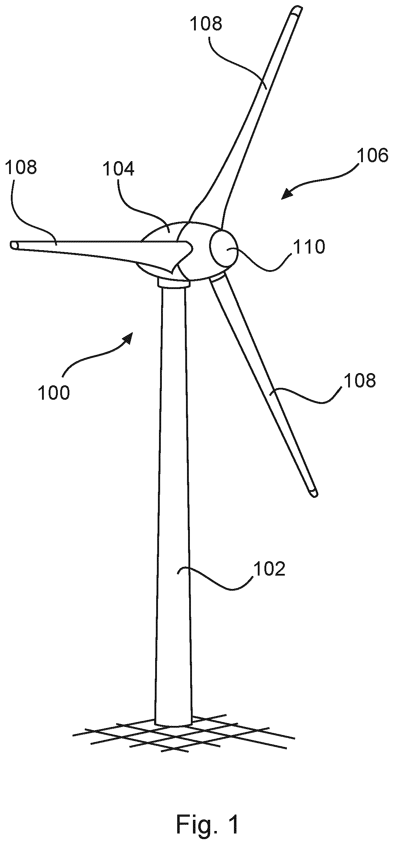

Fig. 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Zum Betreiben der Windenergieanlage ist ferner eine vorstehend oder nachstehend beschriebene Steuereinheit vorgesehen.

Der Generator umfasst zudem einen Stator mit einer Drehachse und einen Rotor, der diese Drehachse umläuft, vorzugsweise als Innenläufer, wobei der Stator elektrisch mit einem aktiven Gleichrichter verbunden ist, welcher über eine Ansteuereinheit ansteuerbar ist.

Der Stator weist dabei zwei, um 30° phasenverschobene, elektrische Wicklungssysteme auf, die jeweils mit einem 3-phasigen Modul des aktiven Gleichrichters verbunden sind. Der Generator ist somit 6-phasig ausgeführt.

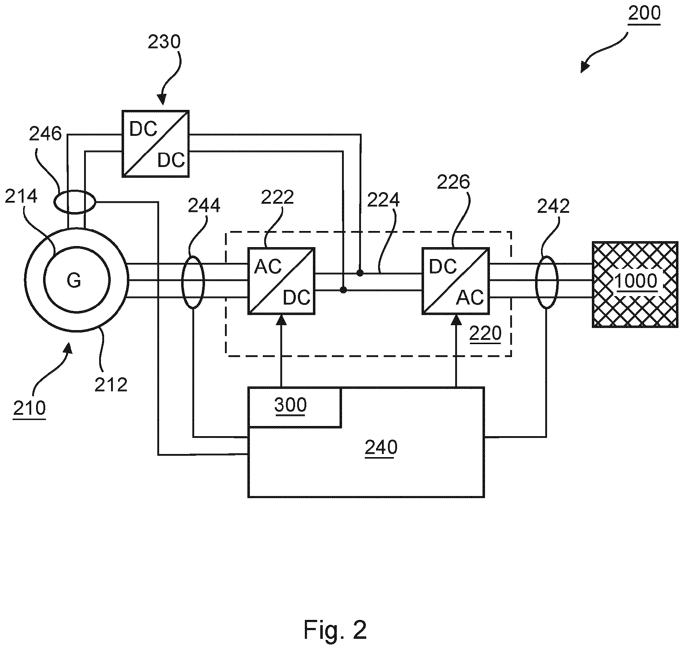

Eine solcher, elektrischer Strang ist in vereinfachter Darstellung, also insbesondere nur mit einem 3-phasen System, der Fig. 2 zu entnehmen.

Fig. 2 zeigt eine schematische Ansicht eines elektrischen Stranges 200 einer Windenergieanlage gemäß einer Ausführungsform, insbesondere einer Windenergieanlage 100 wie in Figur 1 gezeigt.

Die Windenergieanlage umfasst einen Generator 210, der mittels eines Umrichter 220 mit einem elektrischen Versorgungsnetz 1000 verbunden ist.

Der Generator 210 umfasst einen Stator 212 mit einer Drehachse und einen um die Drehachse gelagerten Rotor 214. Der Generator 210 ist dabei bevorzugt als 6-phasiger Innenläufer ausgebildet.

Der Umrichter 220 umfasst einen aktiven Gleichrichter 222, einen Gleichspannungszwischenkreis 224 und einen Wechselrichter 226, wobei der Umrichter 220 mittels des aktiven Gleichrichters über den Stator 212 mit dem Generator 210 verbunden ist.

Um die vom Generator 210 erzeugte elektrische Leistung zu steuern, ist eine Erregung 230 vorgesehen, welche aus dem Gleichspannungszwischenkreis 224 gespeist wird. Die Erregung 230 umfasst dabei bevorzugt wenigstens einen Gleichstromsteller, der mit dem Rotor 214 der Windenergieanlage verbunden ist.

Zum Steuern der Windenergieanlage, und insbesondere des Umrichter 220, ist ferner eine Windenergieanlagensteuerung 240 vorgesehen.

Die Windenergieanlagensteuerung 240 ist mittels Messmitteln 242, 244, 246 dazu eingerichtet, einen Erregerstrom des Rotors 214, einen erzeugten Strom des Stator 212 und einen erzeugten Strom des Wechselrichter 226 zu erfassen und den elektrischen Strang 200 in Abhängigkeit der so erfassten Werte zu steuern.

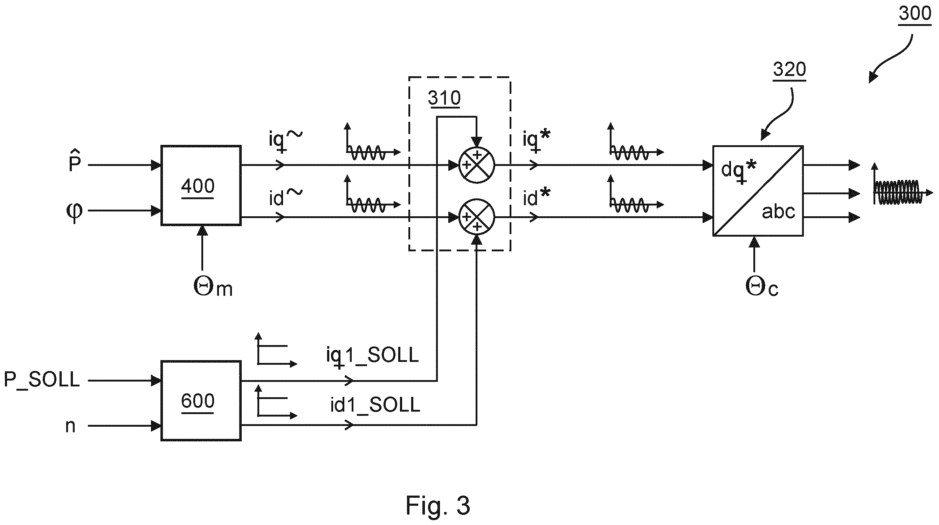

Zudem umfasst die Windenergieanlagensteuerung eine vorstehend oder nachstehend beschriebene Steuereinheit 300, insbesondere wie in Fig. 3 gezeigt.

Fig. 3 zeigt einen schematischen Aufbau einer Steuereinheit 300 einer Windenergieanlage gemäß einer Ausführungsform, insbesondere einer Windenergieanlage 100 wie in Figur 1 gezeigt.

Die Steuereinheit 300 umfasst eine erste Berechnungseinheit 600, eine zweite Berechnungseinheit 400, ein Verbindungselement 310 und bevorzugt eine Ansteuereinheit 320. Bevorzugt arbeitet die Steuereinheit mit Stromgrößen i, insbesondere um den Gleichrichter anzusteuern.

Die erste Berechnungseinheit 600 ist dabei zum Vorgeben von rotorfesten d- und q-Koordinaten id1_soll, iq1_soll für wenigstens einen 3-phasigen Statorstrom des Generators, insbesondere eines Generators wie in Fig. 2 gezeigt, vorgesehen.

Die erste Berechnungseinheit 600 ist also wenigstens dazu vorgesehen, rotorfeste d- und q-Koordinaten id1_soll, iq1_soll in Form einer Gleichgröße, insbesondere als Grundschwingungskomponenten, vorzugeben. Hierfür können bspw. als Haupteingangsgrößen der Leistungssollwert P_soll und die Rotordrehzahl n verwendet werden. Zudem können die Grundschwingungskomponenten bspw. durch einen Algorithmus so berechnet werden, dass der Wirkungsgrad des Generators optimiert wird. Ein Beispiel für einen solchen Algorithmus bzw. ein solches Optimierungsverfahren ist das "Maximum Efficiency perAmpere"-Verfahren (kurz: MEPA).

Die zweite Berechnungseinheit 400 ist dabei zum Bestimmen wenigstens eines Wechselanteils für die rotorfeste d- und/oder q-Koordinate id~, iq~ in Abhängigkeit einer erfassten Amplitude *P̂* und einer erfassten Phasenlage ϕ einer elektrischen Leistungsschwingung am Generator vorgesehen, wobei das Bestimmen des Wechselanteils für die rotorfeste d-und/oder q-Koordinate id~, iq~ unter Berücksichtigung einer Rotorlage Θm erfolgt, die eine mechanische Lage des Rotors in Bezug auf den Stator wiedergibt.

Das Verbindungselement 310, welches die erste und die zweite Berechnungseinheit miteinander verbindet, ist dazu eingerichtet, den Wechselanteil für die rotorfeste d- und/oder q-Koordinate id~, iq~ auf die rotorfeste d- und/oder q-Koordinate id1_soll, iq1_soll zu einer veränderten d- und/oderq-Koordinate id*, iq* aufzuaddieren. Das Verbindungselement 310 ist somit bevorzugt wenigstens als Additionsstelle ausgebildet.

Die so gewonnenen, veränderten d- und/oder q-Koordinaten id*, iq* werden dann bevorzugt mittels einer Ansteuereinheit 320 in abc-Koordinaten transformiert, um den Gleichrichter anzusteuern. Bevorzugt erfolgt diese Transformation unter Berücksichtigung einer elektrischen Phasenlage Θe.

Es wird also insbesondere vorgeschlagen auf dq-Kordinaten id1_soll, iq1_soll, die im Wesentlichen als Gleichanteil ausgeformt sind, einen Wechselanteil aufzuaddieren id~, iq~, der eine mechanische Rotorlage Θm des Generators berücksichtigt. Bevorzugt sind die Koordinaten dabei Stromkoordinaten.

Durch die Berücksichtigung der Phasenlage kann erreicht werden, dass mechanische Unwuchten des Generators elektrisch ausgeglichen werden, wodurch es zu einer Reduktion von bestimmten Vibrations- und Akustikeffekten der Windenergieanlage, insbesondere des Generators, kommt. Auch können durch ein solches Verfahren Turmschwingungen, die durch den Generator hervorgerufen werden, minimiert werden.

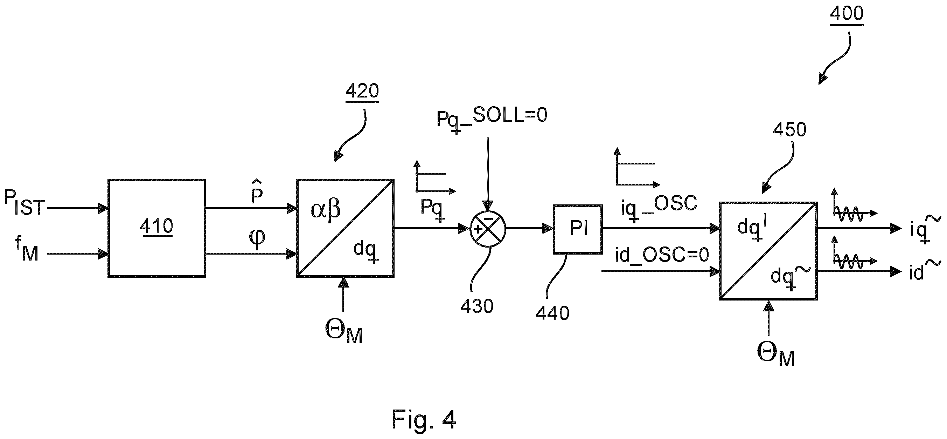

Eine bevorzugte Ausgestaltung der zweiten Berechnungseinheit 400 ist ferner Figur 4 zu entnehmen.

Fig. 4 zeigt einen schematischen Aufbau 400 eines bevorzugten Teils einer Steuereinheit 300 einer Windenergieanlage gemäß einer Ausführungsform, insbesondere einer zweiten Berechnungseinheit 400 einer Steuereinheit wie in Fig. 3 gezeigt.

Die zweite Berechnungseinheit 400 umfasst einen Filter 410, eine erste Transformationseinheit 420, eine Rückführung 430, einen PI-Regler 440 und eine zweite Transformationseinheit 450.

Der Filter 410 ist bevorzugt als Kalmann-Filter ausgebildet und weist als Eingangsgrößen die elektrische Leistung Pist des Generators und die mechanische Frequenz fm des Generators auf. Aus diesen Größen bestimmt der Kalmann-Filter eine Amplitude *P̂* und eine Phasenlage ϕ einer elektrischen Leistungsschwingung. Der Kalmann-Filter selbst kann dabei als optionales Bauteil betrachtet werden. Die Amplitude *P̂* und die Phasenlage ϕ können auch auf andere Weise generiert werden.

Die erste Transformationseinheit 420 transformiert aus den αβ-Koordinaten, nämlich der Amplitude *P̂* und der Phasenlage ϕ, dq-Kordinaten, insbesondere in Form einer Leistungskoordinate Pq. Die Transformation erfolgt dabei bevorzugt unter Berücksichtigung der mechanischen Rotorlage Θm des Generators. Die erste Transformationseinheit ist somit dazu eingerichtet, in Abhängigkeit einer Rotorlage eine drehmomentbildende Komponente zu erzeugen.

Die so gewonnene Leistungskoordinate Pq wird mittels einer Rückführung 430 und eines PI_Reglers 440 zu Null geregelt. Die hieraus gewonnene Stromoszillations-q-Koordinate iq_osc wird zusammen mit einer entsprechenden Stromoszillations-d-Koordinate id_osc =0 der zweiten Transformationseinheit 450 zugeführt.

Die zweite Transformationseinheit 450 ist dazu eingerichtet ist, aus dem Gleichanteil einer d- und/oder q-Koordinate iq_osc, id_osc =0 unter Berücksichtigung der mechanischen Rotorlage Θm einen Wechselanteil einer d- und/oder q-Koordinate iq~, id~ zu generieren, insbesondere eine, die mit der mechanischen Frequenz des Rotors schwingt.

Die zweite Berechnungseinheit 400 ist somit dazu eingerichtet, aus einer elektrischen Leistung Pist des Generators und einer mechanische Frequenz fm des Generators einen Wechselanteil einer d- und/oder q-Koordinate iq~, id~ zu generieren, welche auf eine Grundschwingungskomponente addiert werden, wie bspw. in Fig, 3 gezeigt, insbesondere um Vibrations- und Akustikeffekte eines Generators zu dämpfen.

Die vorliegende Erfindung ermöglicht also insbesondere elektrischen Leistungsschwingung im Bereich der mechanischen Frequenzen zu dämpfen, also jene Leistungsschwingungen die durch Ungleichmäßigkeiten des Luftspaltes verursacht werden.

Sofern der Generator 6-phasig ausgebildet ist, also zwei 3-phasige System umfasst ist das vorstehend und/oder nachstehende beschriebene Verfahren auf jedes der Systeme einzeln anzuwenden.

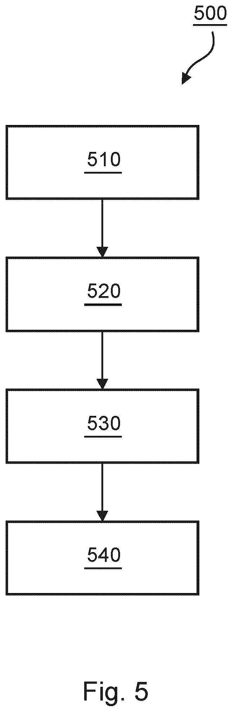

Fig. 5 zeigt einen schematischen Ablauf 500 eines Verfahrens gemäß einer Ausführungsform.

In einem ersten Schritt werden rotorfeste d- und q-Koordinaten für wenigstens einen 3-phasigen Statorstrom des Generators erzeugt. Dies ist durch Block 510 angedeutet.

In einem weiteren, insbesondere zeitgleichen, Schritt wird wenigstens eines Wechselanteils für die rotorfeste d- und/oder q-Koordinate in Abhängigkeit einer erfassten Amplitude und einer erfassten Phasenlage einer elektrischen Leistungsschwingung am Generator bestimmt, wobei das Bestimmen des Wechselanteils für die rotorfeste d- und/oder q-Koordinate unter Berücksichtigung einer Rotorlage erfolgt, die eine mechanische Lage des Rotors in Bezug auf den Stator wiedergibt. Dies ist durch Block 520 angedeutet.

In einem nächsten Schritt werden die Wechselanteile für die rotorfesten d- und/oder q-Koordinaten auf die rotorfesten d- und/oder q-Koordinaten zu veränderten d- und/oder q-Koordinaten addiert. Dies ist durch Block 530 angedeutet.

Anschließend wird in einem weiteren Schritt der aktive Gleichrichter wenigstens in Abhängigkeit der veränderten d- und/oder q-Koordinaten gesteuert, insbesondere mittels abc-Koordinaten. Dies ist durch Block 540 angedeutet.

## Patentansprüche

1. Verfahren zum Steuern eines mit einem Stator (212) eines Generators (210) einer Windenergieanlage (100) elektrisch verbundenen aktiven Gleichrichters (222) mittels einer feldorientierten Regelung, wobei der Generator (210) einen Stator (212) mit einer Drehachse aufweist, um die der Rotor (214) gelagert ist, umfassend die Schritte:
- Vorgeben von rotorfesten d- und q-Koordinaten (id1_soll, iq1_soll) für wenigstens einen 3-phasigen Statorstrom des Generators (210),
- Bestimmen wenigstens eines Wechselanteils für die rotorfeste d- und/oder q-Koordinate (id~, iq~) in Abhängigkeit einer erfassten Amplitude (*P̂*) und einer erfassten Phasenlage (ϕ) einer elektrischen Leistungsschwingung am Generator (210), **dadurch gekennzeichnet, dass** das Bestimmen des Wechselanteils für die rotorfeste d- und/oder q-Koordinate (id~, iq~) unter Berücksichtigung einer Rotorlage (Θm) erfolgt, die eine mechanische Lage des Rotors (106) in Bezug auf den Stator (212) wiedergibt,
- Aufaddieren des Wechselanteils für die rotorfeste d- und/oder q-Koordinate (id~, iq~) auf die rotorfeste d- und/oder q-Koordinate (id1_soll, iq1_soll) zu einer veränderten d-und/oder q-Koordinate (id*, iq*),
- Steuern des aktiven Gleichrichters (222) wenigstens in Abhängigkeit der veränderten d- und/oder q-Koordinate (id*, iq*).

2. Verfahren nach Anspruch 1, wobei
- der Wechselanteil für die rotorfeste d- und/oder q-Koordinate (id~, iq~) in Abhängigkeit der Rotorlage (Θm) erzeugt wird.

3. Verfahren nach Anspruch 1 oder 2, wobei
- zum Bestimmen des Wechselanteils für die rotorfeste d- und/oder q-Koordinate (id~, iq~) eine drehmomentbildende Komponente auf Null geregelt wird, insbesondere mittels eines PI-Reglers (440).

4. Verfahren nach einem der vorstehenden Ansprüche, wobei
- zum Bestimmen des Wechselanteils für die rotorfeste d- und/oder q-Koordinate (id~, iq~), eine feldbildendende Komponente als Null vorgeben wird.

5. Verfahren nach einem der vorstehenden Ansprüche, wobei
- zum Erfassen der Amplitude (*P̂*) und der Phasenlage (ϕ) der elektrischen Leistungsschwingung am Generator (210) eine vom Generator (210) abgegebene Ist-Leistung und eine mechanische Frequenz(fm) des Generators (210) bestimmt wird.

6. Verfahren nach einem der vorstehenden Ansprüche, wobei
- der Wechselanteil für die rotorfeste d- und/oder q-Koordinate (id~, iq~) aus αβ-Koordinaten gewonnen wird.

7. Verfahren nach einem der vorstehenden Ansprüche, wobei
- das Steuern des aktiven Gleichrichters (222) mittels abc-Koordinaten erfolgt, insbesondere so, dass zu es zu einer Reduzierung von Generator- und/oder Turmschwingung kommt.

8. Steuereinheit (300) einer Windenergieanlage (100), wobei die Windenergieanlage (100) wenigstens einen Generator (210) aufweist, der einen Stator (212) mit einer Drehachse umfasst, um die ein Rotor (214) gelagert ist, wobei der Stator (212) elektrisch mit einem aktiven Gleichrichter (222) verbunden ist, welches über eine Ansteuereinheit (320) ansteuerbar ist, wenigstens umfassend:
- eine erste Berechnungseinheit (600) zum Vorgeben von rotorfesten d- und q-Koordinaten (id1_soll, iq1_soll) für wenigstens einen 3-phasigen Statorstrom des Generators (210);
- eine zweite Berechnungseinheit (400) zum Bestimmen wenigstens eines Wechselanteils für die rotorfeste d- und/oder q-Koordinate (id~, iq~) in Abhängigkeit einer erfassten Amplitude (*P̂*) und einer erfassten Phasenlage (ϕ) einer elektrischen Leistungsschwingung am Generator (210), **dadurch gekennzeichnet, dass** das Bestimmen des Wechselanteils für die rotorfeste d-und/oder q-Koordinate (id~, iq~) unter Berücksichtigung einer Rotorlage (Θm) erfolgt, die eine mechanische Lage des Rotors (106) in Bezug auf den Stator (212) wiedergibt und
- ein Verbindungselement (310), welches die erste und die zweite Berechnungseinheit (400) miteinander verbindet und dazu eingerichtet ist, den Wechselanteil für die rotorfeste d- und/oder q-Koordinate (id~, iq~) auf die rotorfeste d- und/oder q-Koordinate (id1_soll, iq1_soll) zu einer veränderten d- und/oder q-Koordinate (id*, iq*) aufzuaddieren.

9. Steuereinheit (300) nach Anspruch 8, wobei
- die Steuereinheit (300) dazu eingerichtet ist mit einem Kalmanfilter (410) und/oder der Ansteuereinheit (320) verbunden zu werden.

10. Steuereinheit (300) nach Anspruch 8 oder 9, ferner umfassend:
- eine erste Transformationseinheit (420) umfasst, die in Abhängigkeit einer Rotorlage (Θm) eine drehmomentbildende Komponente erzeugen kann.

11. Steuereinheit (300) nach einem der Ansprüche 8 bis 10, ferner umfassend:
- einen PI-Regler (440) aufweist, insbesondere um eine drehmomentbildende Komponente auf Null zu regeln.

12. Steuereinheit (300) nach einem der Ansprüche 8 bis 11, ferner umfassend:
- eine zweite Transformationseinheit (450) umfasst, die dazu eingerichtet ist, aus einem Gleichanteil einer d- und/oder q-Koordinate unter Berücksichtigung einer Rotorlage (Θm) einen Wechselanteil einer d- und/oder q-Koordinate zu generieren, insbesondere eine, die mit der mechanischen Frequenz (fm) des Rotors (106) schwingt.

13. Steuereinheit (300) nach einem der Ansprüche 8 bis 12, wobei die Steuereinheit (300) dazu eingerichtet ist ein Verfahren nach einem der Ansprüche 1 bis 7 auszuführen.

14. Windenergieanlage (100) wenigstens umfassend:
- einen Generator (210), der einen Stator (212) mit einer Drehachse aufweist, um die ein Rotor (214) gelagert ist,
- einen mit dem Stator (212) der Windenergieanlage (100) elektrisch verbundenen aktiven Gleichrichter (222), der dazu eingerichtet ist, mittels einer feldorientierten Regelung gesteuert zu werden, und
- eine Steuereinheit (300) nach einem der Ansprüche 8 bis 13.

15. Windenergieanlage (100) nach Anspruch 14 ferner umfassend:
- einen Kalmanfilter (410), der mit der Steuereinheit (300) verbunden ist und außerdem oder alternativ
- eine Ansteuereinheit (320), die dazu eingerichtet ist, mit den aktiven Gleichrichter (222) anzusteuern und die mit der Steuereinheit (300) verbunden ist.

## Claims

1. A method for controlling an active rectifier (222) connected to a stator (212) of a generator (210) of a wind power installation (100) by means of a field-oriented control (222), wherein the generator (210) comprises a stator (212) having an axis of rotation around which the rotor (214) is mounted, comprising the following steps:
- predefining rotor-fixed d and q coordinates (id1_soll, iq1_soll) for at least one 3-phase stator current of the generator (210),
- determining at least one alternating component for the rotor-fixed d and/or q coordinate (id~, iq~) depending on a detected amplitude (*P̂*) and a detected phase position of an electrical power oscillation on the generator (210),
**characterized in that**
- determining the alternating component for the rotor-fixed d and/or q coordinate (id~, iq~) taking account of a rotor (Θm) position which represents a mechanical position of the rotor (106) in relation to the stator (212),
- adding the alternating component for the rotor-fixed d and/or q coordinate (id~, iq~) to the rotor-fixed d and/or q coordinate (id1_soll, iq1_soll) to form a modified d and/or q coordinate (id*, iq*),
- controlling the active rectifier (222) at least depending on the modified d and/or q coordinate (id*, iq*).

2. The method as claimed in claim 1, wherein
- the alternating component for the rotor-fixed d and/or q coordinate (id~, iq~) is generated depending on the rotor position (Θm).

3. The method as claimed in claim 1 or 2, wherein
- a torque-forming component is controlled to zero, in particular by means of a PI controller (440), in order to determine the alternating component for the d and/or q coordinate (id~, iq~).

4. The method as claimed in one of the preceding claims, wherein
- a field-forming component is preset to zero in order to determine the alternating component for the rotor-fixed d and/or q coordinate (id~, iq~).

5. The method as claimed in one of the preceding claims, wherein
- an actual power that is output by the generator (210) and a mechanical frequency (fm) of the generator (210) are determined in order to detect the amplitude (*P̂*) and the phase position (ϕ) of the electrical power oscillation on the generator (210).

6. The method as claimed in one of the preceding claims, wherein
- the alternating component for the rotor-fixed d and/or q coordinate (id~, iq~) is obtained from αβ coordinates.

7. The method as claimed in one of the preceding claims, wherein
- the active rectifier (222) is controlled by means of abc coordinates, particularly in such a way that generator vibration and/or tower vibration is/are reduced as a result.

8. A control unit (300) of a wind power installation (100), wherein the wind power installation (100) has at least one generator (210) which comprises a stator (212) having an axis of rotation around which a rotor (214) is mounted, wherein the stator (212) is electrically connected to an active rectifier (222) which is drivable via a drive unit (320), comprising at least:
- a first calculation unit (600) for predefining rotor-fixed d and q coordinates (id1_soll, iq1_soll) for at least one 3-phase stator current of the generator (210),
- a second calculation (400) unit to determine at least one alternating component for the rotor-fixed d and/or q coordinate (id~, iq~) depending on a detected amplitude (*P̂*) and a detected phase position (ϕ) of an electrical power oscillation on the generator (210),
**characterized in that**
- determining the alternating component for the rotor-fixed d and/or q coordinate (id~, iq~) taking account of a rotor position (Θm) which represents a mechanical position of the rotor (106) in relation to the stator (212), and
- a connection element (310) which interconnects the first and the second calculation unit (400) and is configured to add the alternating component for the rotor-fixed d and/or q coordinate (id~, iq~) to the rotor-fixed d and/or q coordinate (id1_soll, iq1_soll) to form a modified d and/or q coordinate (id*, iq*).

9. The control unit (300) as claimed in claim 8, wherein
- the control unit (300) is configured to be connected to a Kalman filter (410) and/or to the drive unit (320).

10. The control unit (300) as claimed in claim 8 or 9, further comprising:
- a first transformation unit (420) which can generate a torque-forming component depending on a rotor position (Θm).

11. The control unit (300) as claimed in one of claims 8 to 10, further comprising:
- a PI controller (440), in particular to control a torque-forming component to zero.

12. The control unit (300) as claimed in one of claims 8 to 11, further comprising:
- a second transformation unit (450) which is configured to generate an alternating component of a d and/or q coordinate, in particular one which oscillates at the mechanical frequency (fm) of the rotor (106), from a direct component of a d and/or q coordinate, taking account of a rotor position (Θm).

13. The control unit (300) as claimed in one of claims 8 to 12, wherein the control unit (300) is configured to carry out a method as claimed in one of claims 1 to 7.

14. A wind power installation (100) at least comprising:
- a generator (210) which comprises a stator (212) having an axis of rotation around which a rotor (214) is mounted,
- an active rectifier (222) which is electrically connected to the stator (212) of the wind power installation (100) and is configured to be controlled by means of a field-oriented control, and
- a control unit (300) as claimed in one of claims 8 to 13.

15. The wind power installation (100) as claimed in claim 14, further comprising:
- a Kalman filter (410) which is connected to the control unit (300), and, furthermore or alternatively,
- a drive unit (320) which is configured to drive the active rectifier (222) and is connected to the control unit (300).

## Revendications

1. Procédé pour commander un redresseur actif (222) relié électriquement à un stator (212) d'un générateur (210) d'une éolienne (100) au moyen d'une régulation à champ orienté, dans lequel le générateur (210) présente un stator (212) avec un axe de rotation, autour duquel le rotor (214) est monté, comprenant les étapes :
- de prédéfinition de coordonnées d et q fixes de rotor (id1_soll, iq1_soll) pour au moins un courant de stator triphasé du générateur (210),
- de détermination d'au moins une composante alternative pour la coordonnée d et/ou q fixe de rotor (id^{~}, iq^{~}) en fonction d'une amplitude (*P̂*) détectée et d'une position de phase (*ϕ*) détectée d'une oscillation de puissance électrique sur le générateur (210), **caractérisé en ce que** la détermination de la composante alternative pour la coordonnée d et/ou q fixe de rotor (id^{~}, iq^{~}) s'effectue avec prise en compte d'une position de rotor (θm), qui représente une position mécanique du rotor (106) par rapport au stator (212),
- d'addition de la composante alternative pour la coordonnée d et/ou q fixe de rotor (id^{~}, iq^{~}) à la coordonnée d et/ou q fixe de rotor (id1_soll, iq1_soll) en une coordonnée d et/ou q modifiée (id*, iq*),
- de commande du redresseur actif (222) au moins en fonction de la coordonnée d et/ou q modifiée (id*, iq*).

2. Procédé selon la revendication 1, dans lequel
- la composante alternative pour la coordonnée d et/ou q fixe de rotor (id^{~}, iq^{~}) est produite en fonction de la position de rotor (θm).

3. Procédé selon la revendication 1 ou 2, dans lequel
- pour la détermination de la composante alternative pour la coordonnée d et/ou q fixe de rotor (id^{~}, iq^{~}) une composante de formation de couple est régulée sur zéro, en particulier au moyen d'un régulateur PI (440).

4. Procédé selon l'une quelconque des revendications précédentes, dans lequel
- pour la détermination de la composante alternative pour la coordonnée d et/ou q fixe de rotor (id^{~}, iq^{~}), une composante de formation de champ est prédéfinie comme zéro.

5. Procédé selon l'une quelconque des revendications précédentes, dans lequel
- pour la détection de l'amplitude (*P̂*) et de la position de phase (*ϕ*) de l'oscillation de puissance électrique sur le générateur (210) une puissance réelle délivrée par le générateur (210) et une fréquence mécanique (fm) du générateur (210) est déterminée.

6. Procédé selon l'une quelconque des revendications précédentes, dans lequel
- la composante alternative pour la coordonnée d et/ou q fixe de rotor (id^{~}, iq^{~}) est obtenue à partir des coordonnées αβ.

7. Procédé selon l'une quelconque des revendications précédentes, dans lequel
- la commande du redresseur actif (222) s'effectue au moyen de coordonnées abc, en particulier de sorte que cela engendre une réduction d'une oscillation de générateur et/ou de tour.

8. Unité de commande (300) d'une éolienne (100), dans laquelle l'éolienne (100) présente au moins un générateur (210), qui comprend un stator (212) avec un axe de rotation, autour duquel un rotor (214) est monté, dans laquelle le stator (212) est relié électriquement à un redresseur actif (222), lequel peut être commandé par l'intermédiaire d'une unité de commande (320), comprenant au moins :
- une première unité de calcul (600) pour prédéfinir les coordonnées d et q fixes de rotor (id1_soll, iq1_soll) pour au moins un courant de stator triphasé du générateur (210) ;
- une deuxième unité de calcul (400) pour déterminer au moins une composante alternative pour la coordonnée d et/ou q fixe de rotor (id^{~}, iq^{~}) en fonction d'une amplitude (*P̂*) détectée et d'une position de phase (*ϕ*) détectée d'une oscillation de puissance électrique sur le générateur (210), **caractérisée en ce que** la détermination de la composante alternative pour la coordonnée d et/ou q fixe de rotor (id^{~}, iq^{~}) s'effectue avec prise en compte d'une position de rotor (θm), qui représente une position mécanique du rotor (106) par rapport au stator (212) et
- un élément de liaison (310), lequel relie la première et la deuxième unité de calcul (400) l'une à l'autre et est conçu pour additionner la composante alternative pour la coordonnée d et/ou q fixe de rotor (id^{~}, iq^{~}) à la coordonnée d et/ou q fixe de rotor (id1_soll, iq1_soll) en une coordonnée d et/ou q modifiée (id*, iq*).

9. Unité de commande (300) selon la revendication 8, dans laquelle
- l'unité de commande (300) est conçue pour être reliée à un filtre de Kalman (410) et/ou l'unité de commande (320).

10. Unité de commande (300) selon la revendication 8 ou 9, comprenant en outre :
- comprend une première unité de transformation (420) qui, en fonction d'une position de rotor (θm), peut produire une composante de formation de couple.

11. Unité de commande (300) selon l'une quelconque des revendications 8 à 10, comprenant en outre :
- présente un régulateur PI (440), en particulier afin de réguler une composante de formation de couple sur zéro.

12. Unité de commande (300) selon l'une quelconque des revendications 8 à 11, comprenant en outre :
- comprend une deuxième unité de transformation (450), qui est conçue pour générer, à partir d'une composante continue d'une coordonnée d et/ou q avec prise en compte d'une position de rotor (θm), une composante alternative d'une coordonnée d et/ou q, en particulier une qui oscille avec la fréquence mécanique (fm) du rotor (106).

13. Unité de commande (300) selon l'une quelconque des revendications 8 à 12, dans laquelle l'unité de commande (300) est conçue pour mettre en oeuvre un procédé selon l'une quelconque des revendications 1 à 7.

14. Éolienne (100) comprenant au moins :
- un générateur (210), qui présente un stator (212) avec un axe de rotation, autour duquel un rotor (214) est monté,
- un redresseur actif (222) relié électriquement au stator (212) de l'éolienne (100), qui est conçu pour être commandé au moyen d'une régulation à champ orienté, et
- une unité de commande (300) selon l'une quelconque des revendications 8 à 13.

15. Éolienne (100) selon la revendication 14 comprenant en outre :
- un filtre de Kalman (410), qui est relié à l'unité de commande (300) et en plus ou en variante
- une unité de commande (320), qui est conçue pour commander avec le redresseur actif (222) et qui est reliée à l'unité de commande (300).
